# EUROPEAN PATENT APPLICATION

(11) **EP 4 516 559 A1**
(43) Date of publication of application: **05.03.2025**
(21) Application number: 23194417.4
(22) Date of filing: 31.08.2023
(51) Int. Cl.: B60L 1/00, B60L 3/00

(54) **A POWER SUPPLY SYSTEM**

(71) Applicant: KNORR-BREMSE Systeme für Nutzfahrzeuge GmbH, 80809 München (DE)
(72) Inventor: NEMETH, Huba, 1116 Budapest (HU); ZÖLDHEGYI, Valter, 2049 Diósd (HU); DUDAS, Zsolt, 6728 Szeged (HU); SZÖLLOSI, Adam, 1119 Budapest (HU); BATAI, Andras, 7623 Pecs (HU); KOMLOS, Tamas, 6448 Csavoly (HU); MERZA, Valér, 2000 Szentendre (HU); LEITNER, Frank, 80801 München (DE)

(57) **Abstract**

A power supply system (100) for a trailer (10) is disclosed. The power supply system (100) comprises: a first controller (110) and a second controller (120) for controlling one or more loads (400) of the trailer (10); a first power supply terminal (201) for supplying power to the first controller (110) from the towing vehicle (20) via a first power supply channel (210); a second power supply terminal (202) for supplying power to the second controller (120) from the towing vehicle (20) via a second power supply channel (220); and an internal communication link (300) connecting the first controller (110) and the second controller (120) to exchange information with each other, wherein the first power supply channel (210) and the second power supply channel (220) are configured to provide independent power supply to the first controller (110) and to the second controller (120) from the towing vehicle (20).

## Description

The present invention relates to a power supply system for a trailer, the trailer being configured to be towed by a towing vehicle, in particular to a redundant power supply architecture of a highly autonomous driving (HAD) trailer.

The latest electrification and mobility technologies have accelerated the development and change in vehicle system architectures. Trailers supporting highly autonomous functions must have very high system availability to complete the mission even if an individual component fails. To achieve highly autonomous functions, a fault tolerant redundant trailer architecture is required.

For example, US 20220314950 A1 discloses an electromechanical brake system of a vehicle, wherein the power supply units of all axles of the vehicle are redundant power supply structures. The braking performance is maintained even if one part of the power supply network fails. However, the above-mentioned redundant power supply system is limited to a conventional vehicle, and is not specifying any relationship between a towing vehicle and a trailer.

For example, US 2010096845 A1 discloses a mobile trailer unit with a power supply from at least one renewable power source (human, solar, wind, hydro, etc.). However, the above-mentioned power supply is an integrated power supply coupled to the axle(s) of the vehicle or coupled to charge a battery.

Known systems are not able or barley able to establish reliable and fail-safe power supply between a towing vehicle and a trailer by using a redundant power supply system.

Therefore, in order to overcome the shortcomings of the prior art, there is an urgent need in the art for a fail-safe power supply system for a redundant trailer electrical/electronic (E/E) architecture for autonomous operation.

There is a demand for a power supply system for a towing vehicle-trailer combination which is able to provide a centralized trailer architecture with redundant power supply system between the towing vehicle and the trailer.

At least some of the problems as described before are overcome by a power supply system of claim 1, or a method according to claim 13. The dependent claims refer to further advantageous realizations of the subject matter of the independent claims.

The present invention relates to a power supply system for a trailer, the trailer being configured to be towed by a towing vehicle.

The power supply system includes: a first controller and a second controller for controlling one or more loads of the trailer, a first power supply terminal for supplying power to the first controller from the towing vehicle via a first power supply channel, a second power supply terminal for supplying power to the second controller from the towing vehicle via a second power supply channel, and an internal communication link connecting the first controller and the second controller to exchange information with each other.

The first power supply channel and the second power supply channel are further configured to provide independent power supply to the first controller and to the second controller from the towing vehicle.

In is understood that there can be more than two controllers, more than two power supply terminals, or more than two power supply channels. For example, the number of the controllers may correspond to the number of power supply channels. For example, the number of the controllers may also correspond to the number of power supply terminals. In other embodiments, the number of the controllers can be different from the number of power supply channels. In other embodiments, the number of the controllers can be different from the number of power supply terminals.

It is understood, that the power supply terminals are located on the trailer. For example, the power supply terminals can be one plug or separate plugs, and the plug(s) can be safely plugged into one socket or separate sockets, for example sockets on the towing vehicle.

In addition, the one or more loads controlled by the controllers can be different or same loads, i.e. one load can be controlled by different controllers, e.g. as backup. It is understood that the load is a device hosting a function. For example, the controllers are domain electronic controllers. In an embodiment, at least one power supply line is provided between the one or more loads and the controllers.

The first controller and the second controller can be interchangeable. The first controller can be used instead of the second controller and vice versa. The same applies to any two controllers when there are more than two controllers.

In is understood that the controllers are independently supplied with power from the towing vehicle and from axle-driven generators through the power supply channels. For example, the power supply channels are independent of each another, the power supply channels are not connected to each other, the second power supply channel does not influence the first power supply channel, and the first power supply channel is not subject to control by the second power supply channel and vice versa. In addition, if one power supply channel fails (e.g. due to a short) the other power supply channel remain intact. Likewise, if one controller fails the other controller remain intact.

The same applies to any two power supply channels when there are more than two power supply channels. For example, in the situation when one of the power supply channel fails, the other power supply channel remains intact.

The same applies to any two power supply terminals when there are more than two power supply terminals. For example, in the situation when one of the power supply terminal fails, the other power supply terminal remains intact.

For example, at least two controllers share one internal communication link within the trailer for interlink communication between the controllers. In other embodiments at least two controllers share one or more internal communication links. Therefore, at least two controllers have a pairwise independent internal communication channel connected via the internal communication link(s).

It is understood that the towing vehicle or the trailer is not part of the claimed power supply system. The power supply system is, however, mountable on the trailer.

Optionally, the one or more loads may include a safety critical load to perform safety critical functions and non-safety critical loads to perform non-safety critical functions. The first controller and the second controller may be configured to control the same or different safety critical loads and different loads from the non-safety critical loads. The first controller and the second controller may also be configured to control same safety critical load and same loads from the non-safety critical loads. The first controller and the second controller may also be configured to control different safety critical load and different loads from the non-safety critical loads. However, in order to have a fail safe architecture, it may be of advantage that one controls controls only one load.

For example, the safety critical load can perform a safety critical function such as braking the trailer or braking the towing vehicle-trailer combination. For example, the non-safety critical loads can perform a non-safety critical function such as environment sensor fusion or telematics.

Safety critical loads performing safety-relevant functions are hosted on every controller, and the result of the computations of the safety critical functions are crosschecked between the controllers using the internal communication link between the controllers.

Optionally, the power supply system may further comprise at least one of the following: a first communication channel for providing a communication line between the first controller and the towing vehicle; a second communication channel for providing a communication line between the second controller and the towing vehicle; and smart switches having at least a first smart switch and a second smart switch.

For example, the first communication channel and the second communication channel may be configured to provide independent communication to the first controller and to the second controller from the towing vehicle. In is understood that the controllers independently communicate to the towing vehicle through communication channels. For example, the communication channels are independent of each another, the communication channels are not connected to each other, the second communication channel does not influence the first communication channel, and the first communication channel is not subject to control by the second communication channel and vice versa. In addition, if one communication channel fails, the other communication channel remain intact.

For example, the first smart switch may be arranged between the first power supply terminal and the first controller, and the first controller and/or the second controller are configured to control the first smart switch. For example the second smart switch can be arranged between the second power supply terminal and the second controller, and the first controller and/or the second controller are configured to control the second smart switch.

For example the first controller may be configured, upon detection of a defect, to open the first smart switch and/or the second smart switch to cut off the power supply. For example the second controller may be configured, upon detection of another defect, to open the first smart switch and/or the second smart switch to cut off the power supply. The detected defect and the detected another defect are part of the detectable defects.

It is understood that there can be more than two communication channels and more than two communication lines. For example, the number of the communication channels may correspond to the number of the controllers. In other embodiments, the number of the communication channels can be different from the number of controllers.

Optionally, the first controller and/or the second controller may be configured to verify a correct operation of the one or more loads.

Optionally, the power supply system may further comprise a first smart fuse arranged between the first controller and one or more loads, wherein the first controller and/or the second controller are configured to control the first smart fuse.

Optionally, the power supply system may further comprises a second smart fuse arranged between the second controller and one or more loads, wherein the first controller and/or the second controller are configured to control the second smart fuse.

For example, the first controller may be configured, upon detection of the correct operation, to close the first smart fuse to connect the power supply, and/or the second controller may be configured, upon detection of the correct operation, to close the second smart fuse to connect the power supply.

Optionally, the power supply system may further comprise a battery. The battery may be configured to supply power to the one or more loads when no sufficient power is supplied from the towing vehicle for the one or more loads.

Optionally, the power supply system may further comprise a switching device. The switching device can be arranged between the battery and the one or more loads to switch on/off the power supply from the battery to the one or more loads.

For exmaple, the first controller can be configured as a primary domain controller and the second controller can be configured as a redundant domain controller.

Optionally, the information that is exchanged via the internal communication link includes at least one of the following:
- status information about the first controller and/or the second controller;
- status information about the first power supply channel and/or second power supply channel;
- status information about the first power supply terminal and/or second power supply terminal;
- status information about the one or more loads;
- status information about the first communication channel and/or second communication channel;
- status information about the first smart switch and/or the second smart switch;
- status information about the first smart fuse and/or the second smart fuse;
- status information about the battery;
- status information about the switching device;
- other information.

For example, the information is indicative of an occurring defect in the operation of power supply system to the first controller. For example, the information may also be indicative of the correct operation of the power supply system to the first controller. The status information may indicate any defect or malfunctioning of the controller(s).

Optionally, the first controller and/or the second controller may be further configured to monitor a charge level of the battery and/or to control the switching device to maintain a predetermined charge level.

Optionally, the first controller and/or the second controller may be further configured to provide power to the one or more loads when no sufficient power is supplied from the towing vehicle.

Optionally, the one or more loads can be any of the following devices: an electronic brake control device, a levelling control device, a light control device, , any other power consuming device of the trailer or other type of device to which power is delivered.

The other type of power consuming device of the trailer can be for example sensor devices, navigation devices, autonomous control unit, steering system, etc.

Braking control, levelling control, or light control functions may be examples for a safety relevant functions peformed by the safety-critical loads. Telematics image processing, point cloud processing may be one of the non-safety critical functions performed by the non-safety critical loads.

Optionally, the power supply system may comprise a network of power supply channels configured to enable a power supply between the towing vehicle the trailer. For example, the first power supply channel and the second power supply channel may be any two power supply channels within the network of power supply channels.

Optionally, the power supply system may comprise a network of communication channels configured to enable a communication between the towing vehicle the trailer. For example, the first communication channel and the second communication channel may be any two communication channels within the network of communication channels.

Optionally, the power supply system may comprise a network of internal communication links having one or more internal communication links between the controllers. For example, the first controller and the second controller may be any two controllers within a network of controllers.

Optionally, the power supply system may comprise a network of controllers. The network of controllers may be interconnected by the network of internal communication links. For example, the internal communication link between the controllers may be part of the network of internal communication links.

Optionally, the network of controllers may be adapted to identify a defect in any of the controllers based on the information that is exchanged via the network of internal communication links and/or the network of communication channels, and to disable the controller with the defect.

The network of controllers may be further configured to select from the network of controllers a controller without defects and to designate the controller without defects as primary controller. The network of controllers may be further configured to implement functions fulfilled by the controller with the defects on the primary controller, which is the controller without defects.

The present invention further relates to a centralized trailer architecture having a power supply system. Optionally, the centralized trailer architecture is part of a highly autonomous driving (HAD) trailer architecture.

The HAD trailer architecture may have at least two controllers. Each controller may have at least one independent power supply channels and at least one independent communication channel to the towing vehicle. Likewise, each controller may have at least one independent power supply terminal connectable to the towing vehicle.

The present invention relates further to a method for supplying power between a towing vehicle and a trailer within a centralized trailer architecture of a power supply system.

The method comprising the following steps:
- controlling one or more loads of the trailer by a first controller and a second controller;
- supplying power to the first controller from the towing vehicle via a first power supply channel;
- supplying power to the second controller from the towing vehicle via a second power supply channel;
- connecting the first controller and the second controller with an internal communication link to exchange information with each other;

The first power supply channel and the second power supply channel are configured to provide independent power to the first controller and to the second controller from the towing vehicle.

This method may also be implemented in a computer-readable storage device having a software that is stored thereon. The computer-readable storage device is designed to carry out the method for supplying power within a centralized trailer architecture of a power supply system, when the computer program is executed on a processor.

When compared to conventional power supply systems, embodiments of the present invention provide the following advantages. The power supply system would be suitable for a fault tolerant redundant trailer architecture. Moreover, the centralized trailer architecture has a primary or first controller and one or more independent second controllers that enables the trailer to operate safely.

Currently there is no power supply system for a connection between a towing vehicle and a trailer that is able to independently supply power from the towing vehicle to other controllers if an individual component has a failure, and in the same time has a network of controllers interconnected by a network of communication channels, that controllers upon detection of a defect, to open a smart switch to cut off the power supply.

Therefore, embodiments of the present invention can particularly be used for such towing vehicle-trailer power supply system where highly autonomous driving trailer architecture is required.

Some examples of the power supply system will be described in the following by way of examples only, and with respect to the accompanying figures, in which:
- Fig. 1: shows a power supply system for a trailer according to an embodiment of the present invention;
- Fig. 2: shows a power supply system for a trailer according to another embodiment of the present invention;
- Fig. 3: shows a power supply system for a trailer with a network of controllers and a shared internal communication link according to another embodiment of the present invention;
- Fig. 4: shows a power supply system for a trailer with a network of controllers and a pairwise independent internal communication link according to another embodiment of the present invention;
- Fig. 5: depicts schematically a flow diagram of a method for enabling redundant power supply between a towing vehicle and a trailer;

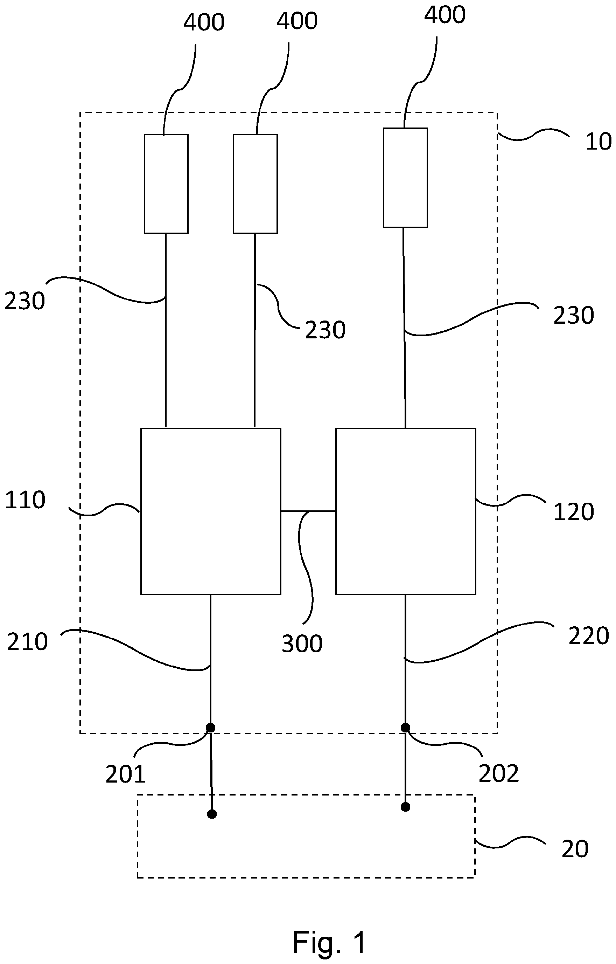

**Fig. 1** shows a power supply system 100, which is suitable for a trailer 10 according to embodiments. The trailer 10 is configured to be towed by a towing vehicle 20.

The power supply system 100 comprises a first power supply terminal 201 for supplying power to the first controller 110 from the towing vehicle 20 via a first power supply channel 210. The power supply system 100 further comprises second power supply terminal 202 for supplying power to the second controller 120 from the towing vehicle 20 via a second power supply channel 220.

It is understood, that the first power supply channel 210 and the second power supply channel 220 are configured to provide independent power supply to the first controller 110 and to the second controller 120 from the towing vehicle 20. The first power supply terminal 201 and the second power supply terminal 202 are located on the trailer 10. For example, the power supply terminals 201, 202 are one plug or separate plugs.

The first controller 110 and the second controller 120 can be interchangeable, for example in case of malfunction of any of the controllers, the first controller 110 can be used instead of the second controller 120 and vice versa.

The one or more loads 400 of the trailer 10 can be controlled by the first controller 110.The one or more loads 400 of the trailer 10 can also be controlled by the second controller 120. It is understood that the load 400 is a device hosting a function.

An internal communication link 300 is located between the first controller 110 and the second controller 120 to exchange information with each other. The internal communication link 300 connects the first controller 110 and the second controller 120, and the first controller 110 and the second controller 120 can communicate with each other and exchange information over the internal communication link 300. In an embodiment, at least one power supply line 230 is provided between the one or more loads and the controllers.

It is understood that the controllers 110, 120 are connected to an electronic control unit. The electronic control unit may be installed on the trailer 10, not necessarily on the towing vehicle 20, or in any other control or in a highly autonomous driving HAD unit present in the trailer 10. The electronic control unit handle the data received from the first controller 110 and/or the second controller 120.

For example, the first controller 110 and the second controller 120 can be located on the trailer 10, between the one or more loads 400 of the trailer 10 and the communication terminals 201, 202. In addition, the controllers 110, 120 can be connected to the one or more loads 400 via the power supply lines 230.

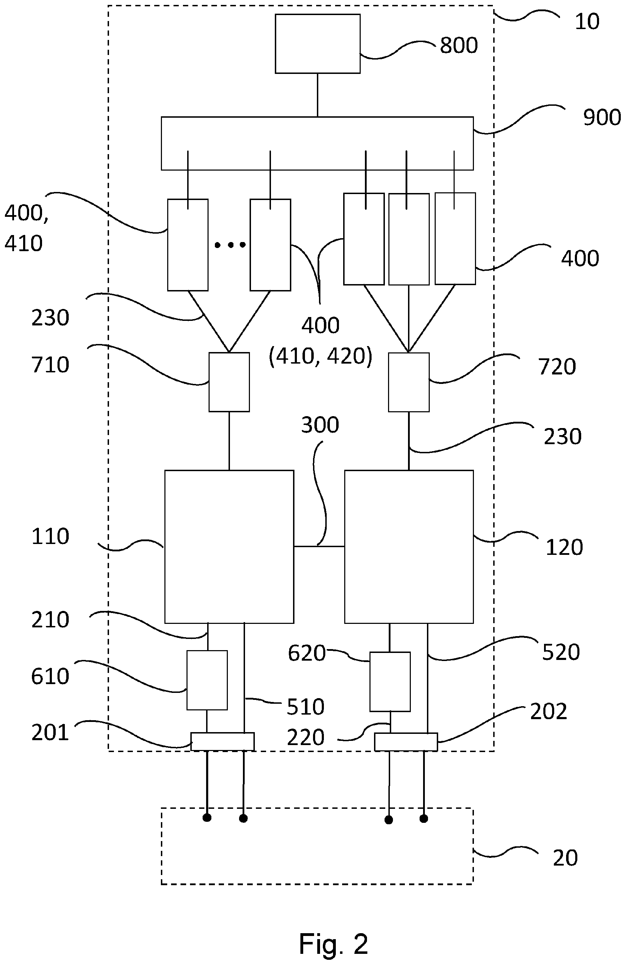

**Fig. 2** shows a power supply system 100 for a trailer 10 according to another embodiment.

The first controller 110 and/or the second controller 120 may be configured to detect defects in the first controller 110 and/or in the second controller 120. The first controller 110 may be configured as a primary controller and the second controller 120 can be configured as a redundant controller. The redundant controller 120 may serve as a duplicate for preventing failure of the power supply system 100 upon failure of a single component, for example the primary controller 110 or one or more loads 400.

The one or more loads 400 can include a safety critical 410 load to perform safety critical functions (e.g. brake control, levelling control) and non-safety critical loads 420 to perform non-safety critical functions (e.g. telematics, image processing, point cloud processing).

For example, the one or more loads 400 can be any of the following devices: an electronic brake control device, a levelling control device, a light control device, telematics device , or any other type of power consuming device of the trailer 10. The first controller 110 and the second controller 120 can be configured to control different safety critical load 410 and different loads from the non-safety critical loads 420.

The safety critical load 410 can have a defect, a single point error or failure (e.g. loss of connectivity to the controllers 110, 120 or to the power supply lines 230). In this situation, the safety critical load 410 with the defect can be separate from the other loads and from the controllers. Therefore, at least two independent power supply lines 210, 220, at least two independent power supply terminals 201, 202, and at least two separate controllers 110, 120 may be implemented in the power supply system 100 to provide a fail-safe power supply between a towing vehicle 20 and a trailer 10.

The power supply system may comprise a first communication channel 510 for providing a communication line between the first controller 110 and the towing vehicle 20, and a second communication channel 520 for providing a communication line between the second controller 120 and the towing vehicle 10. For example, the first communication channel 510 and the second communication channel 520 may be configured to provide independent communication to the first controller 110 and to the second controller 120 from the towing vehicle 10.

It is understood that there can be more than two communication channels and more than communication lines. Therefore, the first communication channel 510 can be configured as a primary communication channel and the second communication channel 520 can be configured as one of the redundant communication channels.

The redundant communication channel 520 may serve as a duplicate for preventing failure of the power supply system 100 upon failure of a single component, for example the primary communication channel 510. The communication lines are located between the towing vehicle 20 and the trailer 10, and independently providing communication between the towing vehicle 20 and the trailer 10.

In other embodiments, the power supply lines 230, which connects the controllers 110, 120 and the one or more loads 400, can also include a communication line. Therefore, the power supply lines 230 can be a power-line communication or power-line carrier to transmit data and simultaneously supply power between the controllers 110, 120 and the one or more loads 400. The power-line communications 230 may carry data on a conductor that is also used simultaneously for AC electric power transmission or electric power distribution to one or more loads 400.

The power supply system 100 may comprise smart switches 600 having at least a first smart switch 610 and a second smart switch 610.

For example, the first smart switch 610 can be arranged between the first power supply terminal 201 and the first controller 110, wherein the first controller 110 and/or the second controller 120 can be configured to control the first smart switch 610.

For example the second smart switch 620 can be arranged between the second power supply terminal 202 and the second controller 120, wherein the first controller 110 and/or the second controller 120 can be configured to control the second smart switch 620. For example, the first controller 110 may be configured, upon detection of a defect, to open the first smart switch 610 and/or the second smart switch 620 to cut off the power supply from the towing vehicle 20. For example the second controller 120 may also be configured, upon detection of another defect, to open the first smart switch 610 and/or the second smart switch 620 to cut off the power supply from the towing vehicle 20. Therefore, the first controller 110 and/or the second controller 120 may be configured to verify a correct operation of the first smart switch 610 and/or the second smart switch 620.

The power supply system 100 may further comprise a first smart fuse 710 arranged between the first controller 110 and one or more loads 400, wherein the first controller 110 and/or the second controller 120 are configured to control the first smart fuse 710. The power supply system 100 may also comprises a second smart fuse 720 arranged between the second controller 120 and one or more loads 400, wherein the first controller 110 and/or the second controller 120 are configured to control the second smart fuse 720. For example, the first smart fuse 710 and/or the second smart fuse 720 may comprise a switching element and a current measurement element.

Conventional fuses, e.g. thermal fuses are slow and inconvenient, and it is known that conventional fuses have to be replaced after every over-current event, because they cut out when triggered. To overcome this limitation, smart fuses 700, for example electronic smart fuses, are used in the present power supply system 100.

The smart fuses 700 may interrupt the circuit of the power supply to the one or more loads 400 of the trailer 10, when the supplied power exceeds a safety critical level or at faulty operation of the one or more loads 400. The interruption of the power supply can be temporarily or permanently based on the exchanged information between the first controller 110 and the second controller 120.

For example, the first controller 110 may be configured, upon detection of the correct operation, to close the first smart fuse 710 to connect the power supply, and/or the second controller 120 may be configured, upon detection of the correct operation, to close the second smart fuse 720 to connect the power supply.

Smart fuses 700 (e.g. 710, 720, 730 ...) may be configured to protect the power supply system 100 based on a pre-set maximum-current trigger point. Smart fuses 700 may detect under voltage, over voltage, or over current (overloaded) by the current measurement element, and disconnect the circuit by the switching element (e.g. cut off the one or more loads 400 from power supply channels 210, 220).

Smart fuses 700 may be designed to be used in response to defects and to drastically enhance the reliability of the power supply system 100. In addition, smart fuses 700 can be placed virtually anywhere in the power supply system 100. In addition, smart fuses 700 may also enable in the power supply system 100 the implementation of tree topologies using much thinner cables or ring topologies for advanced safety features.

The power supply system 100 may further comprise a battery 800. The battery 800 may be configured to supply power to the one or more loads 400 when no sufficient power is supplied from the towing vehicle 20 for the one or more loads 400. In addition, the power supply system 100 may further comprise a switching device 900. The switching device 900 can be arranged between the battery 800 and the one or more loads 400 to switch on/off the power supply from the battery 800 to the one or more loads 400.

For example, in case of under voltage of the battery 800, the switching device 900 may shut down the one or more loads 400 and connects the power supply from the towing vehicle 20 with the battery 800, so that the battery 800 may be recharged.

Smart fuses 700, 710, 720 can enable easy measurement of current and management of one or more loads 400. Smart fuse 700, 710, 720 may be designed for different current levels, and may be especially easy to maintain in case a fault occurs, i.e. they may open automatically. Smart fuses 700, 710, 720 do not need replacement and can be reset by using a software, which is already installed on an electronic control unit.

Therefore, the first controller 110 and/or the second controller 120 may be configured to verify a correct operation of the first smart fuse 710 and/or the second smart fuse 720. For example, the power supply system 100 may further comprise a switching device 900. The switching device 900 can be arranged between the battery 800 and the one or more loads 400 to switch on/off the power supply from the battery 800 to the one or more loads 400.

In other embodiments, the switching device 900 can be integrated into the first controller 110 or into the second controller 120.

The first controller 110 and/or the second controller 120 may be further configured to monitor a charge level of the battery 800 and/or to control the switching device 900 to maintain a predetermined charge level.

For example, the first controller 110 and/or the second controller 120 may be further configured to provide power to the one or more loads 400 when no sufficient power is supplied from the towing vehicle 20.

The information that is exchanged via the internal communication 300 link may include at least one of the following:
- status information about the first controller 110 and/or the second controller 120;
- status information about the first power supply channel 210 and/or second power supply channel 220;
- status information about the first power supply terminal 201 and/or second power supply terminal 202;
- status information about the one or more loads 400;
- status information about the first communication channel 510 and/or second communication channel 520;
- status information about the first smart switch 610 and/or the second smart switch 620;
- status information about the first smart fuse 710 and/or the second smart fuse 720;
- status information about the battery 800;
- status information about the switching device 900;
- other information.

For example, the information is indicative of an occurring defect in the operation of the power supply system 100 to the first controller 110 or indicative of the correct operation of the power supply system 100 to the first controller 110.

For example, the other information may include status information about the braking system, lighting system, navigation system, sensors, steering system, and other subsystems of the trailer 10 or the towing vehicle 20. The internal communication link 300 may also exchange information about different and multiple subsystem of the trailer 10.

Therefore, each controller may determine defects of the other controllers priority based on the exchanged information. The power supply channel corresponding to controller with defects can be disabled and redundant devices/actuators/loads 400 can be activated based on the comparison of the self-status information and received-status information.

In addition, if there is any, the power supply system 100 can register and store the number of status information about defects during one operation cycle.

The smart fuses 700 may protect the power supply system 100 and disconnected the one or more loads 400 with defects from the power supply channels.

The one or more loads 400 may be permanently or temporarily disconnected from the power supply channels based on the status information exchanged through the internal communication line 300.

The one or more loads 400 can form a group of loads, and the smart fuses 700 can be configured to avoid interference between the groups of loads.

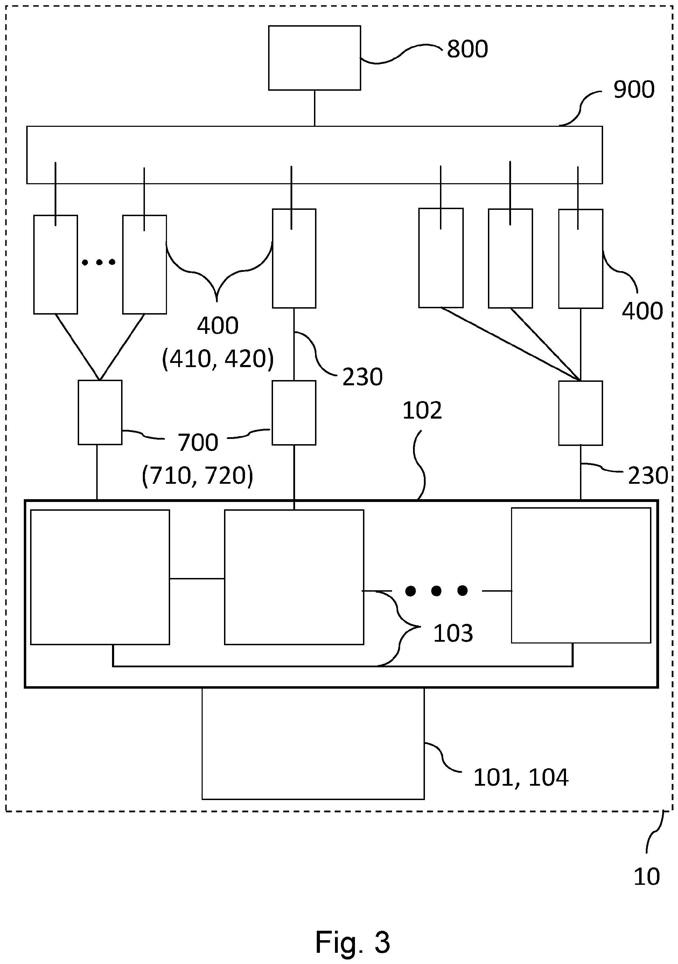

**Fig. 3** shows a power supply system 100 for a trailer 10 with a network of controllers 102 and with a shared internal communication link 300 according to another embodiment.

The network of controllers 102 can be interconnected by the internal communication link 300. The first controller 110 and the second controller 120 can be any two controllers within the network of controllers 102 and the internal communication link 300 can be part of the network of communication channels 101 and the network of internal communication links 103. In other embodiments, the internal communication link 300 is not part of the network of communication channels 101.

The network of communication channels 101 can provide a reliable, secured, and high throughput communication between the towing vehicle 20 and the network of controllers 102.

For example, the power supply system 100 may also comprise a network of controllers 102. The network of controllers 102 may be interconnected by the network of internal communication links 103. For example, the internal communication link 300 between the controllers may be part of the network of internal communication links 103.

Therefore, the network of controllers 102 may be adapted to identify a defect in any of the controllers based on the information that is exchanged via the network of internal communication links 103 and/or the network of communication channels 104, and to disable the controller with the defect.

The defect can be for example a malfunction, a situation requiring service of the loads or other components of the power supply system 100, the lack of responsiveness of the power supply system 100, or any other deviation from normal operation of the power supply system 100 and the components of the power supply system 100.

The network of controllers 102 may be further configured to select from the network of controllers 102 a controller without defects and to designate the controller without defects as first controller 110.

The network of controllers 102 may be further configured to implement functions fulfilled by the controller with the defects on the first controller 110, which is the controller without defects.

The power supply system 100 can be part of a centralized trailer architecture. The centralized trailer architecture can be part of a highly autonomous driving HAD trailer architecture.

Therefore, the power supply system 100, based on the information exchanged via the internal communication link 300, which is part of the network of internal communication links 103, may provide a fail-safe braking, a fail-safe steering and a fail-safe power supply systems for a towing vehicle-trailer system.

In this way, the power supply system 100 of the centralized trailer architecture may have minimal risk maneuvers that ensure the towing vehicle-trailer combination can safely stop and park at any time and enable towing vehicle-trailer combination to continue driving reliably even if a fault occurs in a safety-related power supply system 100 (e.g. the first controller 110 fails, the safety critical load 410 fails, etc.).

The centralized trailer architecture for autonomous driving with the power supply system 100 as disclosed in the embodiments may comprise a redundant fail-safe braking system, a redundant fail-safe steering system, a fail-safe truck motion controller, and a redundant fail-safe power management system.

For example, the fail-safe redundant steering systems may include an all-electric electric power steering system and an electrohydraulic redundant advanced hybrid power steering system. Both steering systems may be suitable for the Highly Autonomous Driving of both electric and conventional vehicles having the power supply system 100 as disclosed in the embodiments.

For example, the fail-safe truck motion controller may connect and coordinate all the actuators actively involved in vehicle dynamics (e.g. braking, steering, drive units), and may represent an interface between the actuation level and the virtual driver.

For example, the fail-safe power management system may provide a highly available electrical power supply for safety-related functions (e.g. safety-critical loads 410) such as brakes and steering, but also the HAD electronic control unit (ECU; control unit with virtual driver) having the power supply system 100 as disclosed in the embodiments Therefore, the HAD trailer architecture may have at least two central or first controllers 110 within the network of controllers 102. Each first controller 110 has an independent power supply channel and an independent communication channel to the towing vehicle 20.

In other embodiments, each first controller has two or more independent power supply channels and two or more independent communication channels to the towing vehicle 20.

It is understood, that the independent communication channel is part of the network of communication channels 101, and the independent power supply channel is part of the network of power supply channels 104.

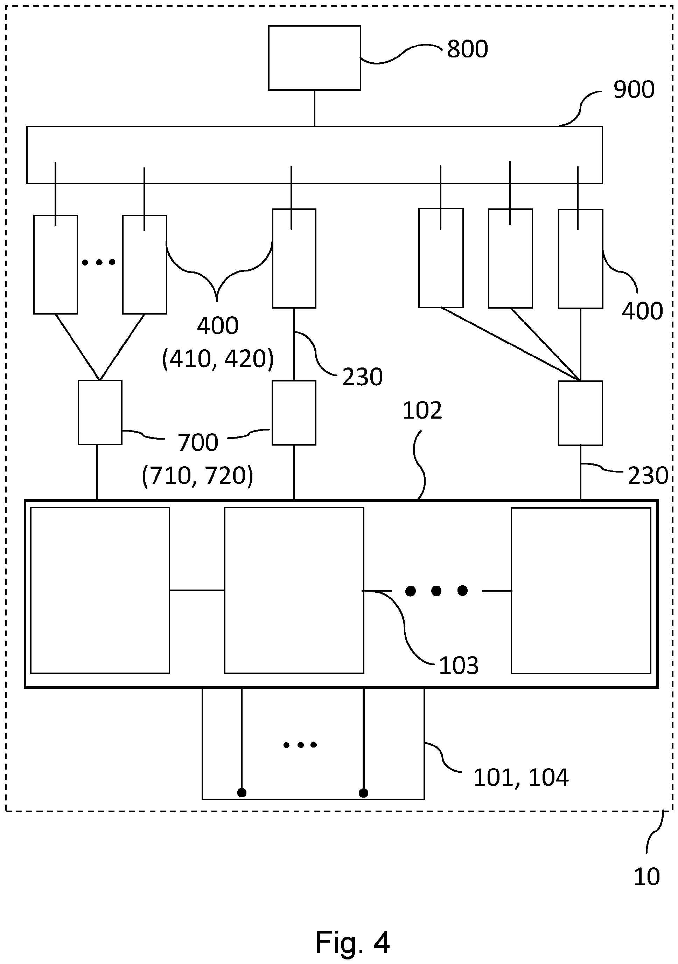

**Fig. 4** shows a power supply system 100 for a trailer 10 with a network of controllers 102 and a pairwise independent internal communication lines 300 according to another embodiment.

For example, at least two controllers within the network of controllers 102 may be pairwise independent. Therefore, the at least two controllers within the network of controllers 102 may have at least two internal communication links 300 within the network of internal communication lines 103.

For example, at the same time, one controller within the network of controllers 102 may be connected to another two other controllers within the network of controllers 102 by at least two individual internal communication links 300 within the network of internal communication lines 103.

Therefore, the internal communication links 300 within the network of internal communication lines 103 may occur in pairs, and an individual controller within the network of controllers 102 is connected to at least two other controllers within the network of controllers 102.

In addition, the network of communication channels 101 may be configured to enable the communication between the towing vehicle 20 and the trailer 10. Likewise, the network of power supply channels 104 may be configured to supply power between the towing vehicle 20 and the trailer 10.

The network of internal communication links 103 may have one or more internal communication links 300 between the controllers. For example, the first controller 110 and the second controller 120 may be any two controllers within the network of controllers 102.

The first power supply channel 210 and the second power supply channel 220 can be any two power supply channels within the network of power supply channels 104. Likewise, the first communication channel 510 and the second communication channel 520 can be any two communication channels within the network of communication channels 101. The internal communication link 300 between the controllers can be part of the network of internal communication lines 103.

In other embodiments, any controller from the network of controllers 102 can control the smart switches 600. Likewise, any controller from the network of controllers 102 can control the smart fuses 700.

For example, the switching device 900 may be configured monitor the state of the battery 800, and to charge or discharge the battery 800.

The switching device 900 may further ensure switching between the incoming power supply from the towing vehicle 20 through the network of power supply channels 104 and the battery 800. The battery 800 may be an on-board battery located within the power supply system 100 on the trailer 10 or an external battery located outside of the power supply system 100, such as on the towing vehicle 20.

For example, the power supply system 100 may comprise at least one power supply channel from the network of power supply channels 104, which is connected to an on-board battery.

In addition, the switch device 900 may also be integrated in any of the controllers from the network of controllers 102, integrated into the power supply system 100 on the trailer 10, or connected externally to any of the controllers from the network of controllers 102.

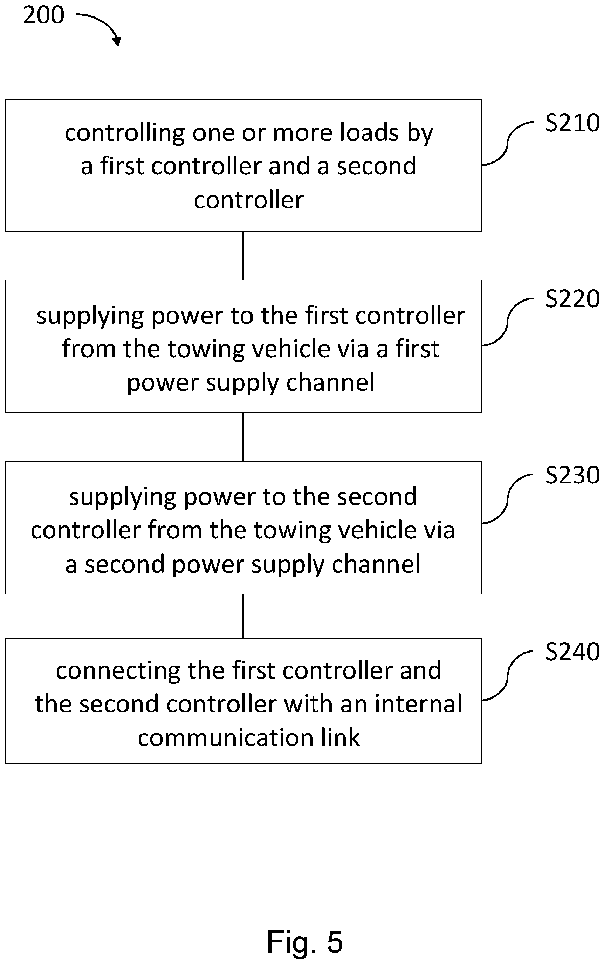

Fig. 5 depicts schematically a flow diagram of a method 200 for supplying power between a towing vehicle 20 and a trailer 10 within a centralized trailer architecture of a power supply system 100. The method 200 comprises the steps of:
- controlling S210 one or more loads 400 of the trailer 10 by a first controller 120 and a second controller 120;
- supplying S220 power to the first controller 110 from the towing vehicle 20 via a first power supply channel 210;
- supplying S230 power to the second controller 120 from the towing vehicle 20 via a second power supply channel 220;
- connecting S140 the first controller 110 and the second controller 120 with an internal communication link 300 to exchange information with each other;

The method 200 may further comprise that the first power supply channel 210 and the second power supply channel 220 are configured to provide independent power supply to the first controller 110 and to the second controller 120 from the towing vehicle 20.

The method 200 may also be a computer-implemented method. A person of skill in the art would readily recognize that steps of various above-described methods may be performed by programmed computers.

Embodiments are also intended to cover program storage devices, e.g., digital data storage media, which are machine or computer-readable and encode machine-executable or computer-executable programs of instructions, wherein the instructions perform some or all of the acts of the above described method 200 when executed on the computer or processor.

Therefore, the distributed power supply system 100 may ensure a very robust overall system functionality.

On the standardized upcoming towing and towed vehicle interface (high speed CAN, high-speed connector HSC) for highly autonomous vehicles two power supply channels are will be available.

However, there might be a possibility for 3-way redundancy with three power supply channels coming from the towed vehicle and from axle-driven generators. These independent power supply channels are connected to the controllers. The main task of the first controller is to manage and monitor the power supply to multiple electric loads or group of loads and ensure a freedom from interference between the electric load or load groups by using smart fuses.

Each controller can have its special blocks for exclusive functions or loads, but on the other hand safety critical power supply control functions can be hosted in any of these controllers within the network of controllers in a redundant way.

In the centralized trailer architecture there is an internal communication link between the controllers. The request to activate the redundant devices like brakes, levelling system etc. is determined by the centralized power supply system, running on each control node (each controllers from the network of controllers).

The relevant power supply channel states and fault tables are distributed from one controller to the other controllers within the network of controllers. If the internal communication link to one controller is broken, that event is also recognized and stored, for example on the electronic control unit. Based on the fault severity, the power supply system decides which controller has the best score for fault (least severe errors). The node with the best score can in each control cycle decide, if other nodes and power supply channels should be disabled.

In case of error-free operation the controller of the power supply channel (primary or master) is used to perform safety critical actions (like braking). In case of severe errors, the controller of the best score node takes over the control and it will be used furthermore for safety critical loads and operations.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: trailer
- 20: towing vehicle
- 101: network of communication channels
- 102: network of controllers
- 103: network of internal communication links
- 104: network of power supply channels
- 110: first controller
- 120: second controller
- 201: first power supply terminal
- 202: second power supply terminal
- 210: first power supply channel
- 220: second power supply channel
- 230: communication lines and/or power supply lines
- 250: one or more data terminals
- 300: internal communication link
- 400: one or more loads
- 410: safety critical load
- 420: non-safety critical loads
- 510: first communication channel
- 520: second communication channel
- 600: smart switches
- 610: first smart switch
- 620: second smart switch
- 700: smart fuses
- 710: first smart fuse
- 720: second smart fuse
- 800: battery
- 900: switch device

## Claims

1. A power supply system for a trailer (10), the trailer (10) being configured to be towed by a towing vehicle (20),
**characterized by**
- a first controller (110) and a second controller (120) for controlling one or more loads (400) of the trailer (10);
- a first power supply terminal (201) for supplying power to the first controller (110) from the towing vehicle (20) via a first power supply channel (210);
- a second power supply terminal (202) for supplying power to the second controller (120) from the towing vehicle (20) via a second power supply channel (220); and
- an internal communication link (300) connecting the first controller (110) and the second controller (120) to exchange information with each other,
wherein the first power supply channel (210) and the second power supply channel (220) are configured to provide independent power supply to the first controller (110) and to the second controller (120) from the towing vehicle (20).

2. The power supply system according to claim 1, wherein the one or more loads (400) include a safety critical load (410) to perform safety critical functions and non-safety critical loads (420) to perform non-safety critical functions,
**characterized in that**
the first controller (110) and the second controller (120) are configured to control the safety critical load (410) and different loads from the non-safety critical loads (420).

3. The power supply system according to claims 1 or claim 2, wherein the first controller (110) and/or the second controller (120) are configured to verify a correct operation of the one or more loads (400),
**characterized by** further comprising at least one of the following:
- smart switches (600) having at least a first smart switch (610) and a second smart switch (620), wherein the first smart switch (610) is arranged between the first power supply terminal (210) and the first controller (110), and the first controller (110) and/or the second controller (120) are configured to control the first smart switch (610), and wherein the second smart switch (620) is arranged between the second power supply terminal (220) and the second controller (120), and the first controller (110) and/or the second controller (120) are configured to control the second smart switch (620);
- a first smart fuse (710) arranged between the first controller (110) and one or more loads (400), wherein the first controller (110) and/or the second controller (120) are configured to control the first smart fuse (710);
- a second smart fuse (720) arranged between the second controller (120) and one or more loads (400), wherein the first controller (110) and/or the second controller (120) are configured to control the second smart fuse (720);
wherein the first controller (110) is configured, upon detection of the correct operation, to close the first smart fuse (710) to connect the power supply, and/or
wherein the second controller (120) is configured, upon detection of the correct operation, to close the second smart fuse (720) to connect the power supply, and/or
wherein the first controller (110) is configured, upon detection of a defect, to open the first smart switch (610) and/or the second smart switch (620) to cut off the power supply, and/or
wherein the second controller (120) is configured, upon detection of another defect, to open the first smart switch (610) and/or the second smart switch (620) to cut off the power supply.

4. The power supply system according to claims 1 to 3,
**characterized by**
- a battery (800) configured to supply power to the one or more loads (400) when no sufficient power is supplied from the towing vehicle (20) for the one or more loads (400); and
- a switching device (900) arranged between the battery (800) and the one or more loads (400) to switch on/off the power supply from the battery (800) to the one or more loads (400).

5. The power supply system according to claims 1 to 4,
**characterized in that**
the information that is exchanged via the internal communication link (300) includes at least one of the following:
- status information about the first controller (110) and/or the second controller (120);
- status information about the first power supply channel (210) and/or second power supply channel (220);
- status information about the first power supply terminal (201) and/or second power supply terminal (202);
- status information about the one or more loads (400);
- status information about the first communication channel (510) and/or second communication channel (520);
- status information about the first smart switch (610) and/or the second smart switch (620);
- status information about the first smart fuse (710) and/or the second smart fuse (720);
- status information about the battery (800);
- status information about the switching device (900);
- other information,
wherein the information is indicative of an occurring defect in the operation of power supply system to the first controller (110) or indicative of the correct operation of the power supply system to the first controller (110).

6. The power supply system according to claims 1 to 5,
**characterized in that**
the first controller (110) and/or the second controller (120) are further configured for at least one of the following:
- to monitor a charge level of the battery (800);
- to control the switching device (900) to maintain a predetermined charge level;
- to provide power to the one or more loads (400) when no sufficient power is supplied from the towing vehicle (20).

7. The power supply system according to claim 1 to claim 6, wherein the first controller (110) and/or the second controller (120) are configured to detect defects in the first controller (110) and/or in the second controller (120),
**characterized by** further comprising at least one of the following:
- a first communication channel (510) for providing a communication line between the first controller (110) and the towing vehicle (20);
- a second communication channel (520) for providing a communication line between the second controller (120) and the towing vehicle (20),
wherein the first communication channel (510) and the second communication channel (520) are configured to provide independent communication to the first controller (110) and to the second controller (120) from the towing vehicle (20).

8. The power supply system according to any of the preceding claims,
**characterized in that**
the one or more loads (400) can be any of the following devices: an electronic brake control device, a levelling control device, a light control device, telematics device, , or any other power consuming device of the trailer (10).

9. The power supply system according to any one of the preceding claims, **characterized by**
- a network of power supply channels (104) configured to enable a power supply between the towing vehicle (20) the trailer (10),
- a network of communication channels (101) configured to enable a communication between the towing vehicle (20) the trailer (10);
- a network of internal communication links (103) having one or more internal communication links (300) between the controllers;
- a network of controllers (102) being interconnected by the network of internal communication links (103); and
wherein the first power supply channel (210) and the second power supply channel (220) being any two power supply channels within the network of power supply channels (104), wherein the first communication channel (510) and the second communication channel (520) being any two communication channels within the network of communication channels (101),
wherein the internal communication link (300) between the controllers is part of the network of internal communication links (103), and
wherein the first controller (110) and the second controller (120) being any two controllers within the network of controllers (102).

10. The power supply system according to claim 9,
**characterized in that**
the network of controllers (102) is adapted to identify a defect in any of the controllers based on the information that is exchanged via the network of internal communication links (103) and/or the network of communication channels (101), and to disable the controller with the defect.

11. A centralized trailer architecture
**characterized by**
a power supply system according to one of the preceding claims.

12. The centralized trailer architecture according to claim 11,
**characterized in that**
the power supply system is part of a highly autonomous driving (HAD) trailer architecture.

13. A method for supplying power between a towing vehicle (20) and a trailer (10) within a centralized trailer architecture of a power supply system,
**characterized by**
- controlling one or more loads (400) of the trailer (10) by a first controller (120) and a second controller (120);
- supplying power to the first controller (110) from the towing vehicle (20) via a first power supply channel (210);
- supplying power to the second controller (120) from the towing vehicle (20) via a second power supply channel (220);
- connecting the first controller (110) and the second controller (120) with an internal communication link (300) to exchange information with each other;
wherein the first power supply channel (210) and the second power supply channel (220) are configured to provide independent power to the first controller (110) and to the second controller (120) from the towing vehicle (20).

14. A computer-readable storage device having a software that is stored thereon and is designed to carry out the method for supplying power from the towing vehicle (20) to the trailer (10) within a centralized trailer architecture of a power supply system (100) as claimed in claim 13, when the computer program is executed on a processor.
